**Europäisches Patentamt**

**European Patent Office**

**Office européen des brevets**

(19)

(11) Veröffentlichungsnummer : **0 454 712 B1**

(12)

# EUROPÄISCHE PATENTSCHRIFT

(45) Veröffentlichungstag der Patentschrift :
26.08.92 Patentblatt 92/35

(51) Int. Cl.⁵ : **F01N 3/28**

(21) Anmeldenummer : **90901792.3**

(22) Anmeldetag : **16.01.90**

(86) Internationale Anmeldenummer :
**PCT/EP90/00086**

(87) Internationale Veröffentlichungsnummer :
**WO 90/08249 26.07.90 Gazette 90/17**

(54) **METALLISCHER WABENKÖRPER.**

(30) Priorität : **17.01.89 DE 8900467 U**

(43) Veröffentlichungstag der Anmeldung :
**06.11.91 Patentblatt 91/45**

(45) Bekanntmachung des Hinweises auf die
Patenterteilung :
**26.08.92 Patentblatt 92/35**

(84) Benannte Vertragsstaaten :
**DE FR GB IT SE**

(56) Entgegenhaltungen :
**EP-A- 136 515**
**EP-A- 298 943**
**GB-A- 2 001 547**
**GB-A- 2 040 179**

(73) Patentinhaber : **Emitec Gesellschaft für**
**Emissionstechnologie mbH**
**Hauptstrasse 150**
**W-5204 Lohmar 1 (DE)**

(72) Erfinder : **MAUS, Wolfgang**
**Gut Horst**
**W-5060 Bergisch Gladbach 1 (DE)**
Erfinder : **WIERES, Ludwig**
**Oppelner Str. 2**
**W-5063 Overath 1 (DE)**

(74) Vertreter : **Kahlhöfer, Hermann**
**Bardehle-Pagenberg-Dost-Altenburg-Frohwitter-Geissler**
**& Partner Patent- und Rechtsanwälte et al**
**Xantener Strasse 12**
**W-4000 Düsseldorf 30 (DE)**

**Beschreibung**

Metallischer Wabenkörper, vorzugsweise Katalysator-Trägerkörper mit Mikrostrukturen zur Strömungsdurchmischung

Die vorliegende Erfindung betrifft einen metallischen Wabenkörper, vorzugsweise für den Einsatz als Katalysator-Trägerkörper in Kraftfahrzeugen. Aus dem Stand der Technik sind vielfältige Formen von metallischen Wabenkörpern bekannt, wobei für die Formgebung der einzelnen Bleche, die einen solchen Wabenkörper bilden, zunächst Gesichtspunkte der mechanischen Stabilität und der Form der einzelnen Kanäle im Vordergrund standen. Hinzu kamen fertigungstechnische Fragen und die Gesichtspunkte der Vergrößerung der wirksamen Oberflächen. Entsprechende Wabenkörper sind beispielsweise in der EP-A-0 159 468, der EP-A-0 220 468 und der EP-A-0 245 737 beschrieben.

Es gibt auch vielfältige makroskopische Strukturen, welche die makroskopische Durchmischung der Strömung in einem Wabenkörper beeinflussen sollen, beispielsweise durch Verbindungsöffnungen zwischen den einzelnen Kanälen oder durch Verwendung von zwei schräg zueinander gewellten, aufeinanderliegenden Blechlagen.

In der EP-B-0 136 515 wurde auch bereits für einen spiralförmig aus abwechselnden Lagen glatter und gewellter Bleche gewickelten Wabenkörper vorgeschlagen, daß glatte Band mit einer Mikrostruktur etwa quer zur Strömungsrichtung zu versehen. Von diesem Stand der Technik, der ursprünglich die Herstellung und Verlötung solcher Wabenkörper begünstigen sollte, geht die vorliegende Erfindung aus. Die Untersuchung der Auswirkung solcher Strukturen auf die Strömung hat nämlich ergeben, daß hier ein zusätzlicher Effekt auftritt, der die mikroskopische Durchmischung der Strömung in den einzelnen Kanälen begünstigt.

Ein solcher Effekt ist auch in der EP-A-0 298 943 erwähnt, in welcher Formschlußverbindungen zwischen glatten und gewellten Blechen spiralig gewickelter Körper beschrieben werden. Eine systematische Ausnutzung dieses Effektes ist jedoch nicht vorgesehen.

Aufgabe der vorliegenden Erfindung ist es daher, einen metallischen Wabenkörper zu schaffen, der den Einfluß von Mikrostrukturen auf die mikroskopische Durchmischung in den einzelnen Kanälen eines Wabenkörpers in besonders günstiger Weise ausnutzt und dadurch die katalytische Wirksamkeit erhöht. Gleichzeitig sollen die mechanischen Eigenschaften des Wabenkörpers günstig beeinflußt werden.

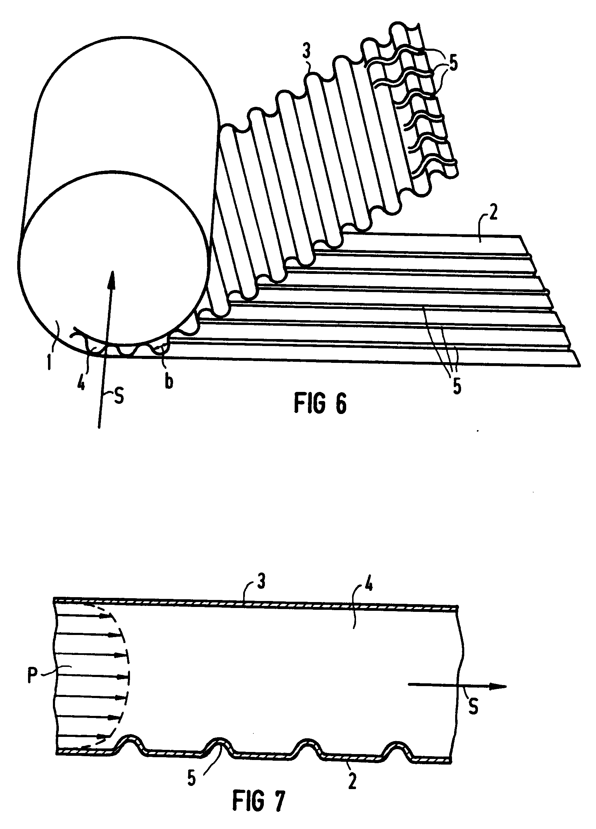

Zur Lösung dieser Aufgabe dient erfindungsgemäß ein metallischer Wabenkörper mit einer Vielzahl von für ein Fluid in einer Strömungsrichtung durchströmbaren Kanälen aus Blechen, die zumindest teilweise mit mindestens einer ersten die Kanäle bildenden Makrostruktur versehen sind, welche die Wabenform, eine mittlere Kanalbreite und wesentliche mechanische Eigenschaften des Wabenkörpers bestimmt, wobei zumindest ein Teil der Bleche zumindest in Teilbereichen mit zusätzlichen Mikrostrukturen versehen ist, die eine Höhe vom 0,01- bis etwa 0,3-fachen der mittleren Kanalbreite, mindestens jedoch 15 μ, aufweisen, wobei die Mikrostrukturen quer oder im Winkel zur Strömungsrichtung verlaufen und in Abständen von 1 - 10 mm in Strömungsrichtung aufeinanderfolgen. Dabei liegen dieser Gestaltung folgende Erkenntnisse zugrunde: Wabenkörper für Katalysatoren weisen bereits aufgrund der großen Zahl von Kanälen pro Querschnittseinheit (üblicherweise 200 bis 500 Kanäle pro Quadratinch) eine große innere Oberfläche bezogen auf das Gesamtvolumen des Körpers auf. Zur effektiven Katalyse ist unter anderem eine möglichst große Katalysator-Oberfläche notwendig. Die wirksame Oberfläche nimmt durch Aufbringen einer Schicht aus Aluminiumoxid üblicherweise um mehr als drei Größenordnungen zu. Ursache ist die im μ-Bereich liegende rauhe und zerklüftete, kristalline Oberflächenstruktur. Zusätzlich ist für eine effektive katalytische Konvertierung jedoch auch der rege Austausch des wandnahen Strömungsbereichs mit dem Kernstrom von Bedeutung (vgl. Figur 7). Das turbulente, insbesondere aber das laminar ausgebildete Strömungsprofil in einem Kanal eines Wabenkörpers weist in dem Übergangsbereich zur Wand hin stark abnehmende Geschwindigkeiten auf. Wird die Gasgeschwindigkeit insgesamt erhöht, verbessert sich zwar der Austausch in Wandnähe, jedoch müssen höhere Drosselverluste in dem Wabenkörper und eine geringere Verweilzeit des Gases im katalytisch aktiven Bereich in Kauf genommen werden. Die rauhe Oberfläche des Aluminiumoxids selbst bewirkt wegen ihrer gleichmäßigen Rauhigkeit im Bereich 10 μ keine besondere Quervermischung. Die vorliegende Erfindung jedoch ermöglicht mit ihren dicht aufeinanderfolgenden zusätzlichen Mikrostrukturen der einzelnen Bleche, welche deutlich größer als die Rauhigkeit des Aluminiumoxides aber deutlich kleiner als die Kanalbreite sind, eine erhebliche Verbesserung der mikroskopischen Strömungsverhältnisse in jedem Kanal, insbesondere in Wandnähe. Die Strömungsverluste steigen dadurch kaum an, jedoch bewirken die zahlreichen mikroskopischen Erhebungen in den Kanalwänden eine lokale Gasgeschwindigkeitssteigerung und Vertiefungen eine lokale Verzögerung der Gasgeschwindigkeit.

Vorteilhafte Ausgestaltungen der Erfindung sind in den abhängigen Ansprüchen beschrieben. Da bei Wabenkörpern aus abwechselnden Lagen glatter und gewellter Bleche die gewellten Bleche den größten Teil der Kanalwände bilden, ist es besonders vorteilhaft, die gewellten Bleche mit einer Mikrostruktur zu versehen. Es hat sich gezeigt, daß eine Wellung von mit solchen Mikrostrukturen versehenen Blechen problemlos möglich ist, ja sogar die Wellung und eine Mikrostruktur unter Umständen in einem Bearbeitungsgang erzeugt werden können. Sinnvoll wird es im allgemeinen sein, alle Kanalwände zumindest in Teilbereichen mit durchgehenden Mikrostrukturen zu versehen.

Nach dem bisher Gesagten kommt es auf die genaue Form der Mikrostruktur nicht besonders an. Diese kann aus Rillen, Sicken, Noppen, Nuten oder dergleichen bestehen, welche sich quer oder im Winkel zur Strömungsrichtung erstrecken und nach einer oder beiden Seiten aus der Blechoberfläche hervorstehen. Sinnvoll ist natürlich eine Strukturierung nach beiden Seiten der Bleche, um alle Kanäle gleichermaßen zu beeinflussen. Die Mikrostrukturen brauchen sich natürlich nicht ununterbrochen über die einzelnen Bleche zu erstrecken, sondern sie können auch mit Unterbrechungen oder versetzt gegeneinander verlaufen.

Für eine Komponente der Randströmung in Richtung zur Kernströmung ist es nicht von entscheidender Bedeutung, daß die Mikrostruktur genau quer zur Strömungsrichtung liegt. Sie kann daher beispielsweise einen Winkel alpha von 75 bis 105° zur Strömungsrichtung bilden.

Sofern man nicht nur eine Komponente der Randströmung in Richtung Kernströmung erreichen will, sondern insgesamt in jedem einzelnen Kanal einen Drall bewirken will, können die Mikrostrukturen auch einen Winkel von ± (15° bis 75°) zur Strömungsrichtung bilden, vorzugsweise etwa 45°. Bei einem solchen Verlauf ergibt sich sowohl eine Komponente der Randströmung in Richtung Kernströmung als auch insgesamt ein Drall der Randströmung, was beides eine verbesserte Durchmischung zur Folge hat.

Um einen besonders effektiven Drall in jedem Kanal zu erzeugen, ist es sinnvoll, zwei aufeinanderliegende Blechlagen mit Mikrostrukturen von gleichem Winkel zur Strömungsrichtung aber mit umgekehrtem Vorzeichen zu versehen. In diesem Falle ergänzen sich die beiden Mikrostrukturen der einen Kanal bildenden Bleche nahezu zu einer wendelförmigen Mikrostruktur, welche einen Drall besonders begünstigt.

Als günstige Maße für die Mikrostrukturen hat sich eine Erstreckung in Strömungsrichtung von 0,05 bis 8 mm, vorzugsweise etwa 0,5 bis 3 mm gezeigt. Für die Höhe der Mikrostruktur ist die Größe der Kanäle des Wabenkörpers von Bedeutung. Als günstig für die Höhe der Mikrostruktur hat sich vorzugsweise etwa das 0,05- bis 0,1-fache der mittleren Breite der Kanäle ergeben. Der Abstand der Mikrostrukturen untereinander in Strömungsrichtung kann zwischen 1 und 10 mm, vorzugsweise 2 - 8 mm, insbesondere 4 - 6 mm betragen.

Beim Schichten oder Wickeln von Blechen stört eine Mikrostruktur nicht unbedingt, wie man zunächst erwarten könnte, sondern kann sogar in vorteilhafter Weise zusätzliche mechanische Wirkungen entfalten. Durch Abstimmen von Formen, Abständen und Anordnungen der Mikrostrukturen auf den Blechen kann ein formschlüssiges Ineinandergreifen dieser Strukturen in den Berührungsbereichen der Bleche beim Wickeln, Schichten oder Verschlingen erreicht werden, wodurch sowohl eine spätere Verlötung von Berührungsbereichen problemlos möglich ist, wie auch eine zusätzliche mechanische Festigkeit des ganzen Wabenkörpers erreichbar ist. Teilweise können die Mikrostrukturen auch Längendehnungen der Bleche kompensieren.

Die Erzeugung der Mikrostrukturen ist auf vielfältige Weise möglich. Diese können zum Beispiel zwischen einer profilierten Stahlwalze und einer Gummiwalze oder zwischen zwei entsprechend profilierten, gegebenenfalls kämmenden Stahlwalzen aufgebracht werden. Auch das Einprägen von Strukturen in diskontinuierlichen Prozessen ist möglich. Die Mikrostrukturen sind im allgemeinen noch so klein, daß die plastische Verformbarkeit der Bleche für ihre Herstellung ausreicht.

Ausführungsbeispiele der Erfindung sind schematisch in der Zeichnung dargestellt, und zwar zeigen
Figur 1 einen mit Mikrostrukturen versehenen Blechstreifen,
Figur 2 einen Querschnitt durch einen solchen Blechstreifen mit einer Strukturvariante,
Figur 3 einen Querschnitt durch Figur 1 zur Veranschaulichung einer anderen Mikrostruktur,
Figur 4 einen Blechstreifen mit einer im Winkel zur Strömungsrichtung liegenden Mikrostruktur,
Figur 5 einen Blechstreifen mit einer zur Drallerzeugung geeigneten Lage der Mikrostruktur,
Figur 6 einen nahezu fertig aufgewickelten Wabenkörper mit erfindungsgemäßen Mikrostrukturen und
Figur 7 eine Veranschaulichung der Strömungsverhältnisse in einem einzelnen Kanal.

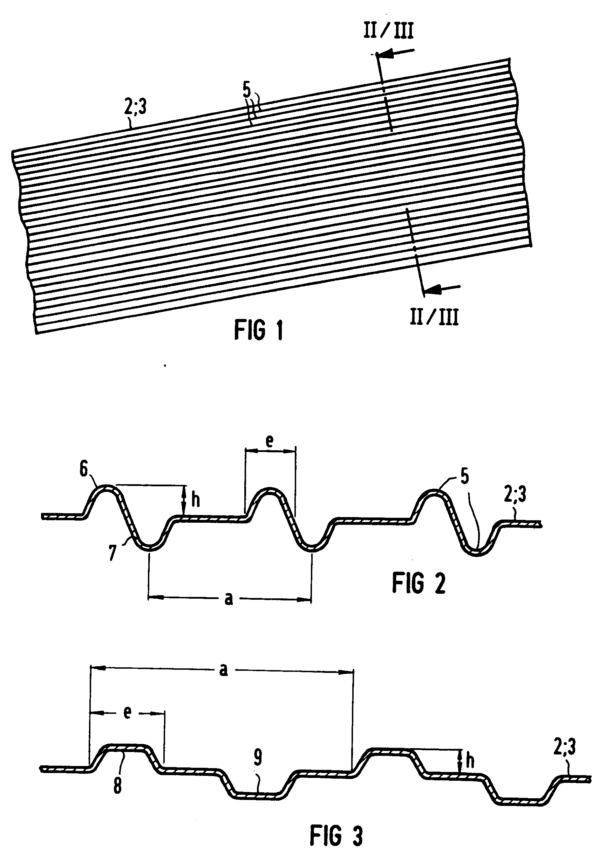

Figur 1 zeigt schematisch einen Abschnitt aus einem Blechstreifen 2 oder 3, welcher eine in seiner Längsrichtung, d. h. quer zu seiner späteren Durchströmungsrichtung verlaufende Mikrostruktur 5 aufweist.

Figur 2 zeigt einen Querschnitt entlang der Linie II/III-II/III durch Figur 1, und zwar eine von vielen möglichen Varianten einer erfindungsgemäßen Mikrostruktur 5. Ein Blechstreifen 2 oder 3 weist viele etwa parallel verlaufende Sicken 6, 7 auf, deren Abstand a untereinander 1 - 10 mm, z. B. etwa 2 mm, betragen kann. Die Erstreckung e in Strömungsrichtung eines einzelnen Berges 6 oder Tales 7 der Mikrostruktur kann z. B. etwa 0,1 bis 0,5 mm betragen. Die maximale Höhe der Mikrostruktur in bezug auf die Oberfläche des Blechstreifens 2 oder 3 soll einen Bruchteil der mittleren Breite eines Kanals in dem Wabenkörper betragen, beispielsweise etwa das 0,05-fache. Absolut kann dies beispielsweise eine Höhe von 15 - 100 μ sein.

Figur 3 zeigt eine andere Variante der Mikrostruktur, bei welcher die einzelnen Erhebungen 8 und Vertiefungen 9 etwa die Form von eingeprägten Nuten oder Rillen aufweisen.

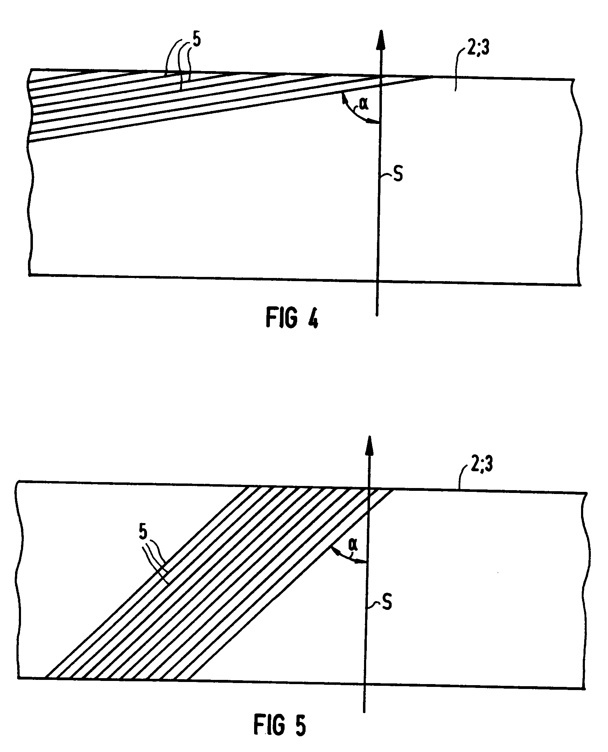

Figur 4 veranschaulicht, daß die Mikrostruktur 5 auf einem Blechstreifen 2 oder 3 einen Winkel alpha zur späteren Durchströmungsrichtung s bilden kann. Für eine wirkungsvolle Quervermischung braucht die Mikrostruktur nicht quer zur Strömungsrichtung zu verlaufen, sondern kann von dieser Richtung um etwa 15° abweichen.

Figur 5 zeigt schematisch, daß für eine spezielle Aufgabenstellung auch ein kleinerer Winkel zwischen der Mikrostruktur 5 auf einem Blechstreifen 2 oder 3 in bezug auf die spätere Durchströmungsrichtung s in Betracht kommt. Zur Erzeugung eines Dralls in jedem einzelnen Strömungskanal kann der Winkel alpha beispielsweise etwa 45° betragen, wobei dieser Winkelbereich in Abhänigkeit von den Dimensionen des Kanals und der Strömungsgeschwindigkeit in diesem auch zwischen $\pm$ (15 bis 75°) liegen kann.

Figur 6 zeigt einen Wabenkörper 1 im Zustand kurz vor Fertigstellung. Er besteht aus einem makroskopisch glatten Blechstreifen 2, welcher eine quer zur Durchströmungsrichtung s verlaufende Mikrostruktur 5 aufweist, und einem makroskopisch gewellten Blechstreifen 3, welcher zusätzlich eine Mikrostruktur 5 quer zur Durchströmungsrichtung s aufweist. Die mittlere Breite b der einzelnen Kanäle 4 ist angedeutet. Im allgemeinen hat die mittlere Kanalbreite b etwa die gleiche Größe wie die durchschnittliche Wellhöhe der ersten Makrostruktur, sofern die erste Makrostruktur eine Wellung ist, z. B. durch eine Evolventenverzahnung hergestellt. Die Größe der zweiten Mikrostruktur könnte daher auch auf die Wellhöhe bezogen werden. Allerdings gibt es Makrostrukturen, bei denen sich weder eine Wellhöhe noch eine mittlere Kanalbreite für den ganzen Körper exakt definieren lassen. Für solche Fälle, für die die vorliegende Erfindung ebenfalls anwendbar ist, soll unter der mittleren Kanalbreite der mittlere Abstand zwischen zwei gleichartig strukturierten Blechlagen verstanden werden. Dies entspricht bei einfachen Strukturen der vorherrschenden Wellhöhe. Spiralförmig gewickelte Katalysator-Trägerkörper sind nur eine Variante von vielen Möglichkeiten, für die die vorliegende Erfindung Anwendung finden kann. In gleicher Weise eignen sich die Mikrostrukturen zur Verbesserung von Wabenkörpern aus geschichteten oder verschlungenen Blechstreifen, wie sie nach dem Stande der Technik bekannt sind.

Figur 7 veranschaulicht das Strömungsprofil p in einem einzelnen Kanal 4 eines Wabenkörpers. In dem Randbereich des Kanals ist die Strömung verhältnismäßig langsam und es findet bei laminarer Strömung kaum ein Austausch zur Kernströmung in der Kanalmitte statt. Das zur Veranschaulichung nicht mit einer Mikrostruktur versehene, den Kanal 4 teilweise begrenzende Blech 3, beeinflußt dieses Strömungsprofil nicht. Das mit einer Mikrostruktur 5 versehene Blech 2 bewirkt jedoch gerade in dem katalytisch wirkungsvollen Randbereich eine Durchmischung der Strömung, ohne jedoch den Druckverlust im Kanal 4 stark zu erhöhen.

Die vorliegende Erfindung erhöht die katalytische Umsetzung in einem Abgaskatalysator durch mikroskopische Verwirbelung der Strömung in den einzelnen Kanälen, so daß ohne sonstige erhebliche Nachteile beispielsweise ein Abgas-Katalysator eines Kraftfahrzeuges eine um einige Prozent höhere Umsetzungsrate aufweisen kann.

**Patentansprüche**

1. Metallischer Wabenkörper (1) mit einer Vielzahl von für ein Fluid in einer Strömungsrichtung (s) durchströmbaren Kanälen (4) aus Blechen (2, 3), die zumindest teilweise mit mindestens einer ersten die Kanäle (4) bildenden Makrostruktur versehen sind, welche die Wabenform, eine mittlere Kanalbreite (b) und wesentliche mechanische Eigenschaften des Wabenkörpers (1) bestimmt, wobei zumindest ein Teil der Bleche (2, 3) zumindest in Teilbereichen mit zusätzlichen Mikrostrukturen (5) versehen ist, **dadurch gekennzeichnet**, daß die Mikrostrukturen (5) eine Höhe (h) vom 0,01- bis etwa 0,3-fachen der mittleren Kanalbreite (b), mindestens jedoch von 15 $\mu$, aufweisen, wobei die Mirkrostrukturen (5) quer oder im Winkel (alpha) zur Strömungsrichtung (s) verlaufen und in Abständen von 1 - 10 mm in Strömungsrichtung (s) aufeinanderfolgen.

2. Wabenkörper nach Anspruch 1, wobei der Wabenkörper (1) aus abwechselnden Lagen glatter (2) und gewellter (3) oder aus Lagen unterschiedlich gewellter Bleche besteht, wobei zumindest ein Teil der gewellten Bleche (3) die zweiten Mikrostrukturen (5) aufweist.

3. Wabenkörper nach Anspruch 1 oder 2, wobei die zweiten Mikrostrukturen (5) aus Rillen, Sicken, Noppen, Nuten oder dergleichen (6, 7, 8, 9) bestehen, welche sich quer oder im Winkel (alpha) zur Strömungsrichtung (s) erstrecken und nach einer oder beiden Seiten aus der Oberfläche der Bleche (2, 3) hervorstehen.

4. Wabenkörper nach Anspruch 1 oder 2, wobei die Mikrostrukturen (5) sich zu der Strömungsrichtung (s) in einem Winkel (alpha) von 75° bis 105° erstrecken, vorzugsweise etwa 90°.

5. Wabenkörper nach Anspruch 1 oder 2, wobei die Mikrostrukturen (5) sich in einem Winkel (alpha) von ± (15° bis 75°) zur Strömungsrichtung (s) erstrecken, vorzugsweise etwa 45°.

6. Wabenkörper nach Anspruch 5, wobei der Winkel (alpha) zwischen den mikrostrukturen (5) und der Strömungsrichtung (s) für zwei aufeinanderliegende Blechlagen etwa gleich groß ist, aber entgegengesetztes Vorzeichen hat.

7. Wabenkörper nach Anspruch 1 oder 2, wobei die zweiten Mikrostrukturen (5) untereinander einen Abstand (a) von 2 bis 8 mm, vorzugsweise etwa 4 bis 6 mm haben.

8. Wabenkörper nach Anspruch 1 oder 2, wobei die zweiten Mikrostrukturen (5) eine Ausdehnung bzw. Länge (e) in Strömungsrichtung (s) von 0,05 bis 8 mm, vorzugsweise etwa 0,5 bis 3 mm haben.

9. Wabenkörper nach Anspruch 1 oder 2, wobei die zweiten Mikrostrukturen (5) eine Höhe (h) etwa vom 0,05- bis 0,1-fachen der mittleren Kanalbreite (b) haben.

10. Wabenkörper nach Anspruch 1 oder 2, wobei alle Bleche (2, 3) in dem Wabenkörper (1) die zweiten Mikrostrukturen (5) aufweisen, wobei deren Formen, Abstände und Anordnungen ein formschlüssiges Ineinandergreifen der Mikrostrukturen in den Berührungsbereichen der Bleche (2, 3) begünstigen.

11. Wabenkörper (1) nach Anspruch 1, wobei der Wabenkörper ein Katalysator-Trägerkörper, z. B. für die Abgasanlage eines Kraftfahrzeuges, ist.


## Revendications

1. Corps métallique en nid d'abeille (1) comprenant une multiplicité de canaux (4) dans lesquels un fluide peut s'écouler dans un sens d'écoulement (s), qui sont constitués de tôles (2,3) munies au moins en partie d'une première structure macroscopique formant les canaux (4) et déterminant la forme en nid d'abeille, une largeur moyenne (b) d'un canal et les propriétés mécaniques essentielles du corps en nid d'abeille (1), une partie au moins des tôles (2,3) étant munie de structures microscopiques (5) supplémentaires dans au moins des régions partielles, caractérisé en ce que les structures microscopiques (5) ont une hauteur (h) représentant de 0,01 à 0,3 fois environ la largeur moyenne (b) d'un canal, mais au moins égale à 15 μ, les structures microscopiques (5) s'étendant transversalement ou en faisant un certain angle (alpha) avec le sens de l'écoulement (s) et se succédant à des intervalles de 1 à 10 mm dans le sens de l'écoulement (s).

2. Corps en nid d'abeille suivant la revendication 1, dans lequel le corps en nid d'abeille (1) est constitué de couches alternées de tôles planes (2) et ondulées (3) ou de couches de tôles ondulées de manière différente, une partie au moins des tôles (3) ondulées comportant les secondes structures microscopiques (5).

3. Corps en nid d'abeille suivant la revendication 1 ou 2, dans lequel les secondes structures microscopiques (5) sont constituées de rainures, de moulures, de boutons, de gorges ou analogues (6, 7, 8, 9), qui s'étendent transversalement en faisant un angle (alpha) avec le sens de l'écoulement (s), et font saillie d'un côté ou des deux côtés de la surface des tôles (2, 3).

4. Corps en nid d'abeille suivant la revendication 1 ou 2, dans lequel les structures microscopiques (5) s'étendent en faisant un angle de 75° à 105° et, de préférence, de 90° environ avec le sens de l'écoulement.

5. Corps en nid d'abeille suivant la revendication 1 ou 2, dans lequel les structures microscopiques (5) s'étendent en faisant un angle (alpha) de ± (15° à 75°) et, de préférence, de 45° environ avec le sens de l'écoulement (s).

6. Corps en nid d'abeille suivant la revendication 5,, dans lequel les angles (alpha) entre les structures microscopiques (5) et le sens d'écoulement (s) sont à peu près les mêmes, pour deux couches de tôles superposées, mais sont de sens opposé.

7. Corps en nid d'abeille suivant la revendication 1 ou 2, dans lequel les secondes structures microscopiques (5) présentent entre elles un intervalle (a) de 2 à 8 mm, et de préférence, de 4 à 6 mm environ.

8. Corps en nid d'abeille suivant la revendication 1 ou 2, dans lequel les secondes structures microscopiques (5) possède une étendue ou une longueur (e), dans le sens de l'écoulement (s), de 0,05 à 8 mm et, de préférence, de 0,5 à 3 mm environ.

9. Corps en nid d'abeille suivant la revendication 1 ou 2, dans lequel les secondes structures microscopiques (5) ont une hauteur (h) représentant de 0,05 à 0,1 fois environ la largeur moyenne d'un canal (b).

10. Corps en nid d'abeille suivant la revendication 1 ou 2, dans lequel toutes les tôles (2, 3) du corps en nid d'abeille (1) présentent les secondes structures microscopiques (5) dont les formes, les intervalles et les agencements favorisent une interpénétration par complémentarité de forme des structures microscopique aux points de contact des tôles (2, 3).

11. Corps en nid d'abeille (1) suivant la revendication 1, dans lequel le corps en nid d'abeilles est un support de catalyseur, par exemple pour le dispositif d'échappement des gaz d'un véhicule automobile.


## Claims

1. A metallic honeycomb body (1) with a plurality of channels (4) of metal sheets (2,3) through which a liquid can pass in the direction of flow (s), which channels are provided at least partially with at least a first macrostructure forming the channels (4), which determines the honeycomb form, an average channel width (b) and essential mechanical properties of the honeycomb body (1), wherein at least a portion of the metal sheets (2,3) is provided, at least in the subregions, with additional microstructures (5), characterised in that the microstructures (5) have a height (h) of 0.01 to approx. 0.3 times the average channel width (b), at least however $15\mu$, wherein the microstructures (5) extend transversely or at an angle (alpha) to the direction of flow (s) and are in series in the direction of flow (s), spaced at 1-10 mm.

2. A honeycomb body according to claim 1, wherein the honeycomb body (1) consists of alternating layers of smooth (2) and corrugated (3) metal sheets or of layers of varyingly corrugated metal sheets, wherein at least a portion of the corrugated metal sheets (3) has the second microstructures (5).

3. A honeycomb body according to claim 1 or 2, wherein the second microstructures (5) consist of grooves, beads, nubs, slots or the like (6,7,8,9), which extend transverse or at an angle (alpha) to the direction of flow (s) and protrude at one or both sides from the surface of the metal sheets (2,3).

4. A honeycomb body according to claim 1 or 2, wherein the microstructures (5) extend to the direction of flow (s) at an angle (alpha) of 75° to 105°, preferably approximately 90°.

5. A honeycomb body according to claim 1 or 2, wherein the microstructures (5) extend at an angle (alpha) of ± (15° to 75°) to the direction of flow (s), preferably approximately 45°.

6. A honeycomb body according to claim 5, wherein the angle (alpha) between the microstructures (5) and the direction of flow (s) is approximately equal for two metal sheet layers lying on each other, but which has a reversed sign.

7. A honeycomb body according to claim 1 or 2, wherein the second microstructures (5) below each other have a spacing (a) of 2 to 8 mm, preferably 4 to 6 mm.

8. A honeycomb body according to claim 1 or 2, wherein the second microstructures (5) have an extension or length (e) in the direction of flow (s) of 0.05 to 8 mm, preferably approx 0.5 to 3 mm.

9. A honeycomb body according to claim 1 or 2, wherein the second microstructures (5) have a height (h) of approx. 0.05 to 0.1 times the average channel width (b).

10. A honeycomb body according to claim 1 or 2, wherein all metal sheets (2,3) in the honey comb (1) have the second microstructures (5), wherein the shapes, spacing and arrangements of which favour a form-locking intermeshing of the microstructures in the contact areas of the metal sheets (2,3).

11. A honeycomb body (1) according to claim 1, wherein the honeycomb is a catalyst carrier body, e.g. for the exhaust gas unit of a motor vehicle.

FIG 1

FIG 2

FIG 3

FIG 4

FIG 5

FIG 6

FIG 7